# EUROPÄISCHE PATENTANMELDUNG

(11) **EP 4 601 107 A1**
(43) Veröffentlichungstag der Anmeldung: **13.08.2025**
(21) Anmeldenummer: 24156449.1
(22) Anmeldetag: 07.02.2024
(51) Int. Cl.: H01M 50/516, H01M 50/528, H01M 50/534, H01M 50/548, B23K 26/00

(54) **VERFAHREN ZUM HERSTELLEN VON BATTERIEZELLEN**

(71) Anmelder: Cellforce Group GmbH, 72138 Kirchentellinsfurt (DE)
(72) Erfinder: Doose, Stefan, 72072 Tübingen (DE); Steiner, Philipp, 72072 Tübingen (DE); Gräf, Jürgen, 72072 Tübingen (DE); Mutz, Philipp, 72072 Tübingen (DE); Bauder, Ronny, 72072 Tübingen (DE)
(74) Vertreter: Müller Schupfner & Partner Patent- und Rechtsanwaltspartnerschaft mbB (Muc)

(57) **Zusammenfassung**

Die Erfindung betrifft ein Verfahren zum Herstellen von einer Batteriezelle, aufweisend mindestens zwei Batteriepole, wobei mindestens ein Elektrodenpaket mit einer Vielzahl von Anodenfolien und Kathodenfolien, welche durch Separatorfolien voneinander getrennt sind, bereitgestellt wird, wobei die Anodenfolien endseitig Anodenableiter und die Kathodenfolien endseitig Kathodenableiter aufweisen, wobei die Anodenableiter und die Kathodenableiter jeweils gebündelt werden, wobei das mindestens eine Elektrodenpaket mit den gebündelten Anodenableitern und gebündelten Kathodenableitern in einem Zellgehäuse positioniert wird, mindestens eine Zelldeckelanordnung mit mindestens einem außenseitig angeordneten Batteriepol und mit mindestens einem, mit dem Batteriepol verbundenen, innenseitig angeordneten Kollektor im Bereich der mindestens einen Öffnung des Zellgehäuses derart positioniert wird, dass die gebündelten Anodenableiter und/oder gebündelten Kathodenableiter direkt oder indirekt auf dem mindestens einen Kollektor aufliegen, wobei ein Spalt zwischen dem Zellgehäuse und der mindestens einen Zelldeckelanordnung im Bereich der Öffnung des Zellgehäuses eingestellt wird, die gebündelten Anodenableiter und gebündelten Kathodenableiter direkt oder indirekt elektrisch leitend mit dem mindestens einen Kollektor verbunden werden, und die mindestens eine Öffnung des Zellgehäuses durch die mindestens eine Zelldeckelanordnung verschlossen wird. Des Weiteren betrifft die Erfindung eine Batteriezelle.

## Beschreibung

Die Erfindung betrifft ein Verfahren zum Herstellen von einer Batteriezelle, aufweisend mindestens zwei Batteriepole, wobei mindestens ein Elektrodenpaket mit einer Vielzahl von Anodenfolien und Kathodenfolien, welche durch Separatorfolien voneinander getrennt sind, bereitgestellt wird, wobei die Anodenfolien endseitig Anodenableiter und die Kathodenfolien endseitig Kathodenableiter aufweisen. Des Weiteren betrifft die Erfindung eine Batteriezelle.

Neben den sogenannten Pouch-Zellen mit flexiblen bzw. folienartigen Zellgehäusen sind auch Hardcase-Zellen bekannt. Derartige Batteriezellen besitzen ein starres metallisches Gehäuse und können geometrisch in prismatischer Form oder in Form von Rundzellen ausgebildet sein. Die jeweiligen Batteriepole sind an den sogenannten Terminals der Batteriezelle in erhabener Form auf der Außenseite positioniert, um eine vereinfachte, elektrische Anbindung zu ermöglichen. Üblicherweise sind die Batteriepole in einem Zelldeckel der Batteriezelle integriert, die ein Innenvolumen des Zellgehäuses verschließt.

Der Zelldeckel der Batteriezelle ist üblicherweise aus einem Metall, wie beispielsweise Aluminium, Edelstahl oder Stahl mit einer Nickelbeschichtung, gefertigt. Gegenüber dem Zelldeckel isoliert werden Batteriepole eingebracht, die mit Kollektoren verbunden sind. Die Batteriepole bilden dabei einen außenseitigen elektrischen Anschluss aus und sind elektrisch leitend mit den zum Innenvolumen des Zellgehäuses zugewandten Kollektoren verbunden.

Im Innenvolumen des Zellgehäuses werden bei elektrochemischen Speichern, wie beispielsweise einer Lithium-Ionen-Batterien, Elektrodenpakete angeordnet, die aus einander abwechselnden, Lagen bzw. Schichten von Anoden, Kathoden und Separatoren bestehen. Derartige Anodenfolien und Kathodenfolien können durch Wickeln oder Stapeln geformt und in dem Innenvolumen des Zellengehäuses für den endgültigen Gebrauch durch Kunden positioniert werden. Die jeweiligen Anodenfolien und Kathodenfolien müssen im Rahmen der Batteriezellenherstellung mit den Batteriepolen verbunden werden. Hierzu dienen Anodenableiter und Kathodenableiter als Verbindungsleitungen zwischen den Batteriepolen und den Anodenfolien bzw. Kathodenfolien. Zellseitig regulär werden an die beiden Kollektoren die unbeschichteten Enden der Kupferträgerfolien der Anodenfolien sowie der Aluminiumträgerfolien der Kathodenfolien geschweißt, die aus dem Elektrodenpaket herausstehen. Für die Bereitstellung eines optimalen Werkzeugzugangs für die Schweißung mit den Kollektoren müssen die Anodenableiter und Kathodenableiter in Überlänge ausgeführt werden. Diese Überlänge resultiert in der Verwendung von Elektroden mit breiten unbeschichteten Bereichen und in einem erhöhten Materialbedarf und Verschnitt.

Die Fertigung der Elektroden erfolgt in der Regel als Endlosband. Dabei werden aktive Beschichtungen der Trägerfolien durch einen Kalander zwischen Walzenpaaren verdichtet und die Anodenfolien bzw. Kathodenfolien anschließend ausgestanzt. Aufgrund der erforderlichen Überlänge werden breite, unbeschichtete Bereiche der Trägerfolien vorgesehen, die beim Kalandrieren besonders anfällig für Verzug sein können.

Die vorliegende Erfindung hat daher die Aufgabe, ein Verfahren zum Herstellen von Batteriezellen zu schaffen, durch welches die erforderliche Überlänge der Anodenfolien und Kathodenfolien und damit auch das Volumen des Zellgehäuses minimiert werden kann. Diese Aufgabe wird durch die im Anspruch 1 angegebenen Merkmale gelöst. Weitere vorteilhafte Ausgestaltungen der Erfindung sind Bestandteil der Unteransprüche.

Gemäß einem Aspekt der Erfindung wird ein Verfahren zum Herstellen von Batteriezellen bereitgestellt. Eine derartige Batteriezelle weist mindestens zwei Batteriepole auf. In einem Schritt des Verfahrens wird mindestens ein Elektrodenpaket mit einer Vielzahl von Anodenfolien und Kathodenfolien, welche durch Separatorfolien voneinander getrennt sind, bereitgestellt.

Die Anodenfolien weisen endseitig Anodenableiter und die Kathodenfolien weisen endseitig Kathodenableiter auf. Die Anodenableiter und die Kathodenableiter werden jeweils gebündelt. Je nach Ausgestaltung können die Anodenableiter und die Kathodenableiter eines Elektrodenpakets oder mehrerer Elektrodenpakete gleichzeitig gebündelt werden. Bei einer alternativen Ausgestaltung können die Anodenableiter und die Kathodenableiter von einem oder mehreren Elektrodenpaketen in parallelen Gruppen gebündelt werden, welche anschließend direkt oder indirekt miteinander verbindbar sind oder parallel nebeneinander mit Kollektoren verbindbar sein können.

Bei einem weiteren Schritt des Verfahrens wird das mindestens eine Elektrodenpaket mit den gebündelten Anodenableitern und gebündelten Kathodenableitern in einem Zellgehäuse positioniert. Das mindestens eine Elektrodenpaket kann hierbei außenseitig isoliert oder nicht isoliert in einem Innenraum oder Innenvolumen des Zellgehäuses angeordnet werden. Die gebündelten Anodenableitern und gebündelten Kathodenableitern können dabei zumindest bereichsweise aus einer oder mehreren Öffnungen des Zellgehäuses hinausragen oder im Bereich der mindestens einen Öffnung enden.

Mindestens eine Zelldeckelanordnung wird mit mindestens einem außenseitig angeordneten Batteriepol und mit mindestens einem, mit dem Batteriepol verbundenen, innenseitig angeordneten Kollektor im Bereich der mindestens einen Öffnung des Zellgehäuses derart positioniert, dass die gebündelten Anodenableiter und/oder gebündelten Kathodenableiter direkt oder indirekt auf dem mindestens einen Kollektor aufliegen. Dabei wird ein Spalt zwischen dem Zellgehäuse und der mindestens einen Zelldeckelanordnung eingestellt, um einen Werkzeugzugang zu den auf dem mindestens einen Kollektor aufliegenden, gebündelten, Anodenableitern und/oder gebündelten Kathodenableitern zu gewährleisten.

Die gebündelten Anodenableiter und gebündelten Kathodenableiter werden nach dem Positionieren der mindestens einen Zelldeckelanordnung direkt oder indirekt elektrisch leitend mit dem mindestens einen Kollektor verbunden.

In einem weiteren Schritt wird die mindestens eine Öffnung des Zellgehäuses durch die mindestens eine Zelldeckelanordnung verschlossen.

Die mindestens eine Zelldeckelanordnung ist dazu eingerichtet, die mindestens eine Öffnung des Zellgehäuses fluiddicht zu verschließen. Insbesondere kann die Zelldeckelanordnung nach einer elektrischen Anbindung des mindestens einen Elektrodenpakets über die Anodenableiter und/oder Kathodenableiter in die Öffnung eingesetzt und anschließend verbunden werden. Dies kann beispielsweise durch Verkleben, Verschweißen, Verlöten, Bördeln, und dergleichen erfolgen.

Nach einem weiteren Aspekt der Erfindung wird eine Batteriezelle bereitgestellt, welche durch das erfindungsgemäße Verfahren hergestellt ist. Dabei kann das Verfahren dazu eingerichtet sei, eine Vielzahl von Batteriezellen gleichzeitig bzw. parallel oder nacheinander herzustellen.

Die Batteriezelle weist ein Zellgehäuse mit mindestens einer Öffnung und mit mindestens einer Zelldeckelanordnung auf. Die mindestens eine Zelldeckelanordnung verschließt dabei die mindestens eine Öffnung, insbesondere fluiddicht. In dem Zellgehäuse der Batteriezelle ist mindestens ein Elektrodenpaket angeordnet, welches elektrisch mit Batteriepolen der mindestens einen Zelldeckelanordnung verbunden ist.

Durch das erfindungsgemäße Verfahren können besonders kurze Überlängen zum Ausbilden der Anodenableiter und Kathodenableiter eingestellt werden, sodass das sogenannte Wrinkling bei der Herstellung der Kathodenfolien und Anodenfolien minimiert werden kann.

Aufgrund der reduzierten Länge der Anodenableiter und Kathodenableiter kann eine besonders optimale Bauraumausnutzung erzielt werden, welche mit einer Maximierung der Kapazität der Batteriezelle einhergeht.

Weiterhin kann durch das erfindungsgemäße Verfahren eine Verringerung der Komplexität bei der Fertigung bzw. Herstellung realisiert werden, wodurch auch die Fertigungszeiten der Batteriezellen gesenkt werden können.

Das mindestens eine Elektrodenpaket mit den gebündelten Anodenableitern und gebündelten Kathodenableitern kann technisch besonders einfach gegenüber dem Zellgehäuse galvanisch getrennt werden, wenn vor dem Positionieren in dem Zellgehäuse mit einer außenseitigen Isolation versehen wird. Durch die Bündelung der Anodenableiter und Kathodenableiter ist das mindestens eine Elektrodenpaket bereits als zu einer Einheit verbunden und kann hierdurch technisch einfach gehandhabt werden. Insbesondere können zusätzliche Haltevorrichtungen oder Klemmen zum Zusammenhalten der Folien des Elektrodenpakets entfallen.

Nach einer weiteren Ausführungsform liegen die gebündelten Anodenableiter und/oder gebündelten Kathodenableiter indirekt über mindestens eine Ableiterverlängerung auf dem mindestens einen Kollektor auf. Vorteilhafterweise werden die gebündelten Anodenableiter und gebündelten Kathodenableiter indirekt über die Ableiterverlängerung elektrisch leitend mit dem mindestens einen Kollektor verbunden. Die kurzen Bündel bzw. gebündelten Anodenableiter und Kathodenableiter werden beispielsweise über eine Laserschweißnaht mit der zusätzlichen Ableiterverlängerung verbunden.

Nach dem Positionieren des Elektrodenpakets im Zellgehäuse kann die elektrisch angebundene Ableiterverlängerung an den jeweiligen Kollektor der Zelldeckelanordnung bzw. Deckelbaugruppe geschweißt oder gelötet werden. Die Ableiterverlängerung kann beispielsweise in Form eines Verlängerungsblechs ausgeführt sein.

Die Ableiter des Elektrodenpaket können technisch besonders einfach mit Ableiterverlängerungen versehen werden, wenn die mindestens eine Ableiterverlängerung der gebündelten Kathodenableiter aus Aluminium oder einer Aluminiumlegierung und die mindestens eine Ableiterverlängerung der gebündelten Anodenableiter aus Kupfer oder einer Kupferlegierung verwendet wird. Diese Maßnahme ermöglicht das stoffschlüssige Verbinden von Komponenten mit einem identischen oder einem ähnlichen Material.

Gemäß einem weiteren Ausführungsbeispiel wird die mindestens eine Zelldeckelanordnung in einem Winkel im Bereich der Öffnung des Zellgehäuses positioniert, um eine direkte oder indirekte Verbindung zwischen den gebündelten Anodenableitern und/oder gebündelten Kathodenableitern herzustellen. Der Winkel kann beispielsweise in einem Bereich von 5° bis 85°, einschließlich 5° und 85° liegen. Diese Maßnahme ermöglicht eine Ausbildung eines Spalts zwischen der Zelldeckelanordnung und dem Zellgehäuse, durch welchen ein Werkzeugzugang bereitgestellt werden kann, um die Ableiter direkt oder indirekt mit den entsprechenden Kollektoren zu verbinden. Somit können aufwendige Fertigungsschritte, wie das sogenannte Butterfly Welding, entfallen.

Der Spalt zwischen der mindestens einen Zelldeckelanordnung und dem Zellgehäuse kann konstant und wiederholbar eingestellt werden, wenn mindestens eine Haltevorrichtung verwendet wird, durch welche die mindestens eine Zelldeckelanordnung relativ zu der mindestens einen Öffnung des Zellgehäuses positioniert wird.

Bevorzugterweise werden in einer weiteren Ausführungsform die gebündelten Anodenableiter und/oder die gebündelten Kathodenableiter und/oder
Ableiterverlängerungen aufgrund von elastischen Eigenschaften und/oder durch mindestens einen Niederhalter auf dem mindestens einen Kollektor der mindestens einen Zelldeckelanordnung gepresst. Hierdurch kann ein Anpressdruck auf die Ableiter oder die Ableiterverlängerung eingestellt werden, um ein zuverlässiges Schweißen oder Löten zu realisieren.

Nach einer weiteren Ausführungsform werden die gebündelten Anodenableiter und/oder die gebündelten Kathodenableiter direkt oder indirekt durch ein Einbringen von mindestens einer randseitigen Schweißnaht elektrisch leitend mit dem mindestens einen Kollektor verbunden. Vorteilhafterweise kann die Schweißnaht entlang eines Randes der gebündelten Anodenableiter und/oder die gebündelten Kathodenableiter erfolgen, welche dem Spalt zugewandt ist. Hierdurch können die gebündelten Anodenableiter und/oder die gebündelten Kathodenableiter besonders kurz ausgeführt sein.

Die gebündelten Anodenableiter und/oder die gebündelten Kathodenableiter und/oder entsprechende Ableiterverlängerungen können auch bei einem besonders klein eingestellten Spalt zwischen dem Zellgehäuse und der Zelldeckelanordnung elektrisch leitend mit dem Kollektor verbunden werden, wenn diese durch ein Einbringen von mindestens einer Kehlnaht-Schweißung geschweißt werden. Beispielsweise kann ein Laserschweißverfahren oder ein alternatives Schweißverfahren eingesetzt werden, um eine Kehlnaht-Schweißung zwischen einem Ableiter bzw. Ableiterverlängerung und einem Kollektor umzusetzen. Diese Maßnahme ermöglicht die stoffschlüssige Verbindung zwischen den gebündelten Anodenableitern, gebündelten Kathodenableitern, entsprechenden Ableiterverlängerungen und dem Kollektor auch bei einem besonders gering eingestelltem Winkel zwischen der Zelldeckelanordnung und dem Zellgehäuse, durch welchen die Zelldeckelanordnung steil angestellt und nicht flach in Verlängerung des Zellgehäuses positioniert sein kann.

Gemäß einem weiteren Ausführungsbeispiel weist die Batteriezelle mindestens zwei an zwei gegenüberliegenden Seiten des Zellgehäuses angeordnete Batteriepole auf, wobei die Anodenableiter der Anodenfolien an einer ersten Seite und die Kathodenableiter der Kathodenfolien an einer zweiten Seite des Elektrodenpakets gebündelt werden. Hierdurch können zwei Zelldeckelanordnungen eingesetzt werden, um jeweils die Anodenableiter und die Kathodenableiter elektrisch direkt oder indirekt über Ableiterverlängerungen zu kontaktieren.

Nach einer weiteren Ausführungsform werden zwei Zelldeckelanordnungen bereitgestellt, wobei eine erste Zelldeckelanordnung im Bereich einer ersten Öffnung und eine zweite Zelldeckelanordnung im Bereich einer zweiten Öffnung des Zellgehäuses angeordnet wird. Vorteilhafterweise werden die Zelldeckelanordnungen mit einem gleichen oder einem voneinander abweichenden Winkel gegenüber dem Zellgehäuse positioniert, um die gebündelten Anodenableiter und gebündelten Kathodenableiter elektrisch zu kontaktieren. Diese Maßnahme ermöglicht eine variable Anpassung des Spalts zwischen den Zelldeckelanordnungen und dem Zellgehäuse.

Die elektrisch leitende Verbindung zwischen den Ableitern und den Kollektoren kann besonders gleichmäßig umgesetzt werden, wenn die beiden Zelldeckelanordnungen zueinander spiegelsymmetrisch angeordnet werden. Beispielsweise können die Zelldeckelanordnungen in einem Winkel von ca. 45° gegenüber dem Zellgehäuse angestellt bzw. positioniert werden, um eine Schweißverbindung zum Verbinden der Ableiter bzw. Ableiterverlängerungen mit den entsprechenden Kollektoren der Zelldeckelanordnungen einbringen zu können.

Die Taktzeiten bei der Herstellung der Batteriezellen können minimiert werden, wenn die gebündelten Anodenableiter und gebündelten Kathodenableiter zeitgleich direkt oder indirekt elektrisch leitend mit jeweils mindestens einem Kollektor verbunden werden.

Nach einer Ausführungsform werden die Anodenableiter und die Kathodenableiter jedes Elektrodenpakets separat gebündelt. Diese Maßnahme ermöglicht eine technisch einfachere Umsetzung von Schweißverbindungen.

Gemäß einer alternativen Ausgestaltung werden die Anodenableiter und die Kathodenableiter mehrerer Elektrodenpakete zusammen gebündelt. Hierdurch kann der verfügbare Bauraum im Zellgehäuse besonders optimal ausgenutzt werden. Beispielsweise können bis zu 100 Ableiter zusammengefasst und gebündelt werden. Dabei kann beispielsweise ein Ultraschall-Schweißverfahren eingesetzt werden, um die Ableiter zu bündeln.

Werden beispielsweise alle Ableiter aller Elektrodenpakete bzw. Zellstacks in einem einzelnen Strang gebündelt, kann eine mechanisch zusammenhängende Anordnung aus Elektrodenpaketen und Ableitern ausgebildet werden. Die Bündelung fixiert die Elektrodenpakete zueinander. Diese Maßnahme kann das anschließende Wrapping der Elektrodenpakete mit einem isolierenden Material technisch vereinfachen, da ein Rotieren und Handhaben ohne eine zusätzliche Fixierung der einzelnen Folien der Elektrodenpakete möglich ist. Darüber hinaus ermöglicht das elektrisch leitende Verbinden bzw. Bündeln aller Anodenableiter und/oder aller Kathodenableiter eine Minimierung der Länge der jeweiligen Ableiter, wodurch auch das Kalandrieren der jeweiligen Folien des Elektrodenpakets technisch vereinfacht werden kann.

Nachstehend werden mehrere Ausführungsbeispiele der Erfindung anhand der Zeichnungen näher erläutert. Es zeigen:
Fig. 1 eine perspektivische Darstellung von Elektrodenstapeln zum Veranschaulichen eines Verfahrens gemäß einer Ausführungsform der Erfindung,
Fig. 2 eine perspektivische Darstellung der Elektrodenstapel aus Fig. 1 mit gebündelten Anodenableitern und gebündelten Kathodenableitern,
Fig. 3 eine perspektivische Darstellung der Elektrodenstapel aus Fig. 2 mit durch Ableiterverlängerungen verlängerten Anodenableitern und Kathodenableitern,
Fig. 4 eine perspektivische Darstellung der Elektrodenstapel aus Fig. 3 mit einer außenseitigen Isolierung,
Fig. 5 eine perspektivische Darstellung der in ein Zellgehäuse eingebrachten Elektrodenstapel aus Fig. 4,
Fig. 6 eine perspektivische Darstellung des Zellgehäuses mit eingebrachten Elektrodenpaketen aus Fig. 5 mit elektrisch verbundenen Zelldeckelanordnungen,
Fig. 7 eine schematische Schnittdarstellung des Zellgehäuses aus Fig. 6 zum Veranschaulichen einer elektrisch leitenden Verbindung von Anodenableitern und Kathodenableitern mit Kollektoren der Zelldeckelanordnungen,
Fig. 8 eine perspektivische Darstellung einer Batteriezelle gemäß einer Ausführungsform der Erfindung, und
Fig. 9 weitere perspektivische Darstellungen von Elektrodenpakten zum Veranschaulichen einer alternativen Ausführungsform einer Bündelung von Anodenableitern und Kathodenableitern.

In den Abbildungen kennzeichnen identische Bezugsziffern dieselben Elemente bzw. konstruktiven Bestandteile. Die Größen und relativen Positionen der Elemente in den Abbildungen sind nicht unbedingt maßstabsgetreu gezeichnet, und einige dieser Elemente sind vergrößert dargestellt und der Übersicht halber angepasst positioniert. Darüber hinaus sollen die besonderen Formen der gezeichneten Elemente keine Informationen über die tatsächliche Form der einzelnen Elemente vermitteln, sondern wurden lediglich zur leichteren Erkennbarkeit in den Abbildungen ausgewählt.

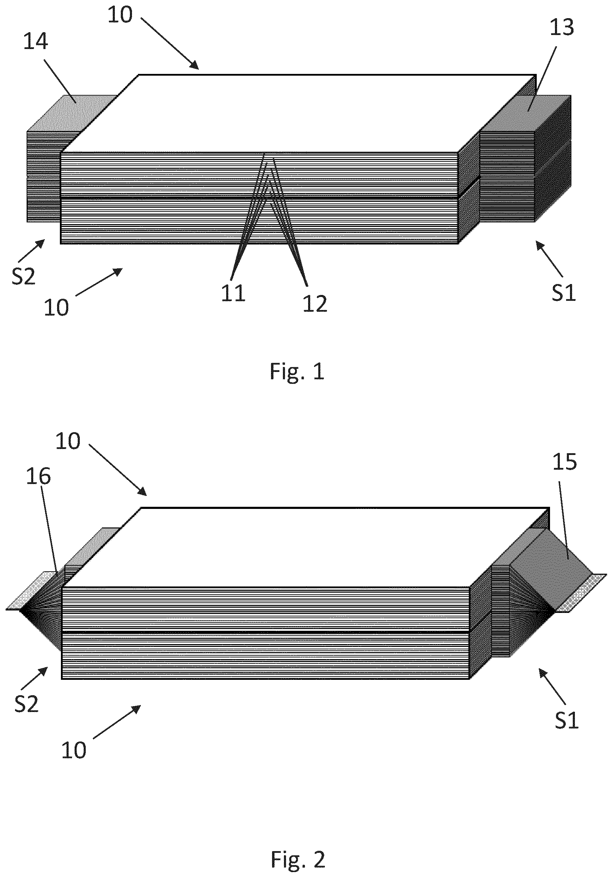

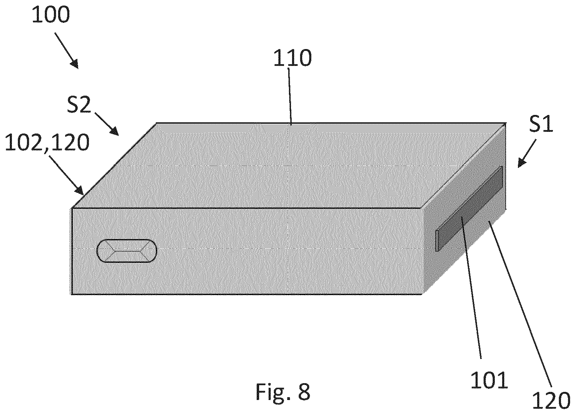

Die Fig. 1 zeigt eine perspektivische Darstellung von Elektrodenstapeln 10 zum Veranschaulichen eines Verfahrens gemäß einer Ausführungsform der Erfindung. Dabei wird in der Fig. 1 ein beispielhafter Schritt des Verfahrens veranschaulicht. Die weiteren Fig. 2 bis Fig. 9 veranschaulichen hierbei weitere Schritte des erfindungsgemäßen Verfahrens zum Herstellen von Batteriezellen 100. In Fig. 8 ist beispielhaft eine durch das Verfahren hergestellte Batteriezelle 100 dargestellt. Eine derartige Batteriezelle 100 weist im dargestellten Ausführungsbeispiel zwei Batteriepole 101, 102 auf.

In einem Schritt des Verfahrens, welcher in Fig. 1 illustriert ist, werden beispielhaft zwei Elektrodenpakete 10 mit einer Vielzahl von Anodenfolien 11 und Kathodenfolien 12, welche durch nicht gezeigte Separatorfolien voneinander getrennt sind, bereitgestellt.

Die Elektrodenpakete 10 sind übereinander gestapelt. Die Anodenfolien 11 weisen endseitig Anodenableiter 13 und die Kathodenfolien 12 weisen endseitig Kathodenableiter 14 auf. Die Anodenableiter 13 sind an einer ersten Seite S1 und die Kathodenableiter 14 an einer zweiten Seite S2 der Batteriezelle 100 angeordnet bzw. stehen die Anodenableiter 13 an einer ersten Seite S1 und die Kathodenableiter 14 an einer zweiten Seite S2 von den Anodenfolien 11 und den Kathodenfolien 12 ab.

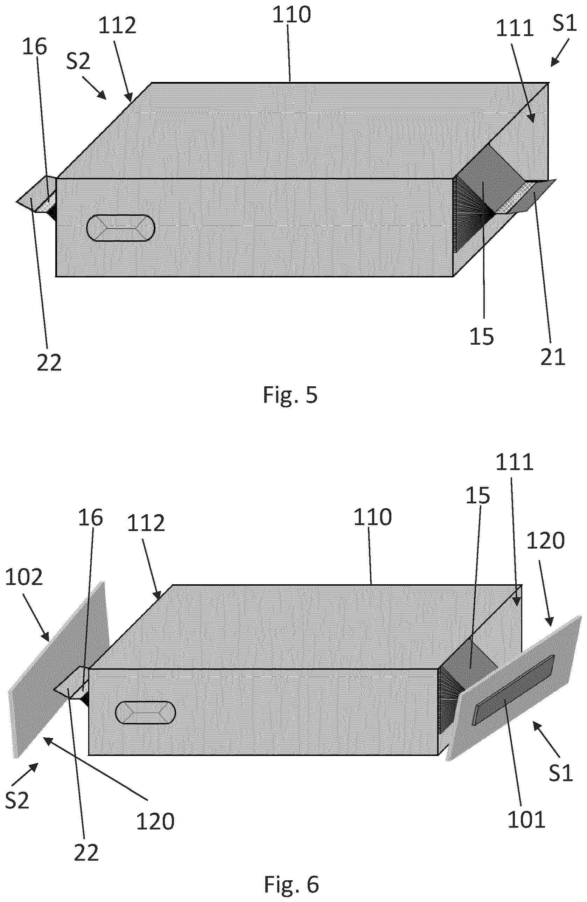

Die Anodenableiter 13 und die Kathodenableiter 14 weisen eine von den Anodenfolien 11 und den Kathodenfolien 12 abweichende Form mit einer beispielhaft kleineren Querschnittsfläche auf. Im gezeigten Ausführungsbeispiel sind die Anodenableiter 13 und die Kathodenableiter 14 mit einer rechteckigen Querschnittsfläche ausgestaltet. Die jeweiligen Querschnittsflächen der Anodenfolien 11, Kathodenfolien 12, Anodenableiter 13 und der Kathodenableiter 14 kann dabei beliebig gewählt sein und beispielsweise an die entsprechende Form eines Zellgehäuses 110 (s. Fig. 5) und/oder einer Anwendung der Batteriezelle 100 angepasst sein.

In einem weiteren Schritt des Verfahrens, welches in Fig. 2 veranschaulichst ist, werden die Anodenableiter 13 und die Kathodenableiter 14 jeweils gebündelt. Die Fig. 2 zeigt eine perspektivische Darstellung der Elektrodenstapel 10 aus Fig. 1 mit bereits gebündelten Anodenableitern 15 und gebündelten Kathodenableitern 16. Die Anodenableiter 13 und die Kathodenableiter 14 werden im gezeigten Ausführungsbeispiel durch ein Ultraschall-Schweißverfahren zu gebündelten Anodenableitern 15 und gebündelten Kathodenableitern 16 verbunden. Durch die Ausgestaltung der Anodenableiter 13 und der Kathodenableiter 14 ohne eine elektrische Isolierung, sind alle gebündelten Anodenableitern 15 und alle gebündelten Kathodenableitern 16 jeweils elektrisch miteinander verbunden und somit, im gezeigten Ausführungsbeispiel, elektrisch parallel geschaltet.

Optional können die gebündelten Anodenableiter 15 und die gebündelten Kathodenableiter 16 geformt und/oder geschnitten werden.

Im dargestellten Ausführungsbeispiel werden die Anodenableiter 13 und die Kathodenableiter 14 aller Elektrodenpakete 10 gleichzeitig zu einem sogenannten Single-Tab gebündelt.

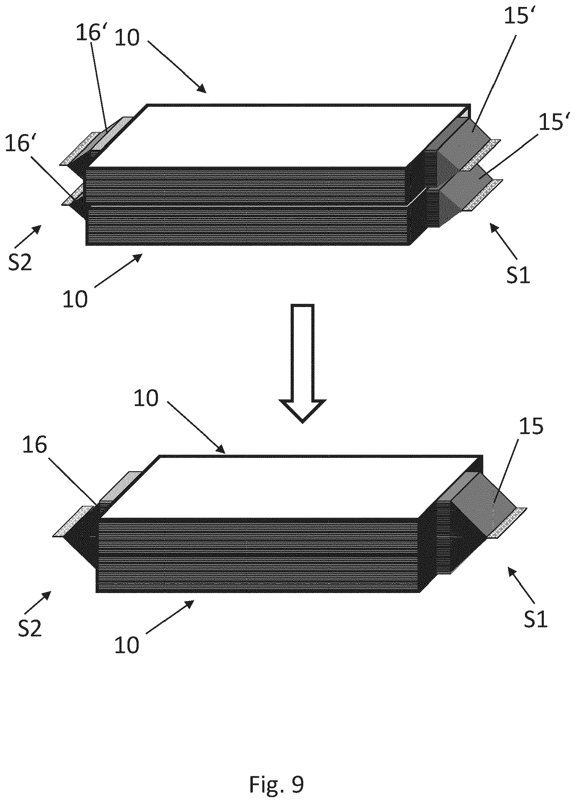

Bei einer alternativen Ausgestaltung, welche in der Fig. 9 gezeigt ist, können die Anodenableiter 13 und die Kathodenableiter 14 jeweils von einem Elektrodenpaket 10 in einem Zwischenschritt zu Gruppen 15', 16' miteinander gebündelt bzw. verbunden werden. Die Fig. 9 veranschaulicht in perspektivischen Darstellungen von Elektrodenpakten 10 eine alternative Ausführungsform einer Bündelung von Anodenableitern 13 und Kathodenableitern 14. In einem anschließenden Schritt können die gebündelten Gruppen von Anodenableitern 15' und die Kathodenableitern 16' zu gebündelten Anodenableitern 15 und gebündelten Kathodenableitern 16 verbunden werden.

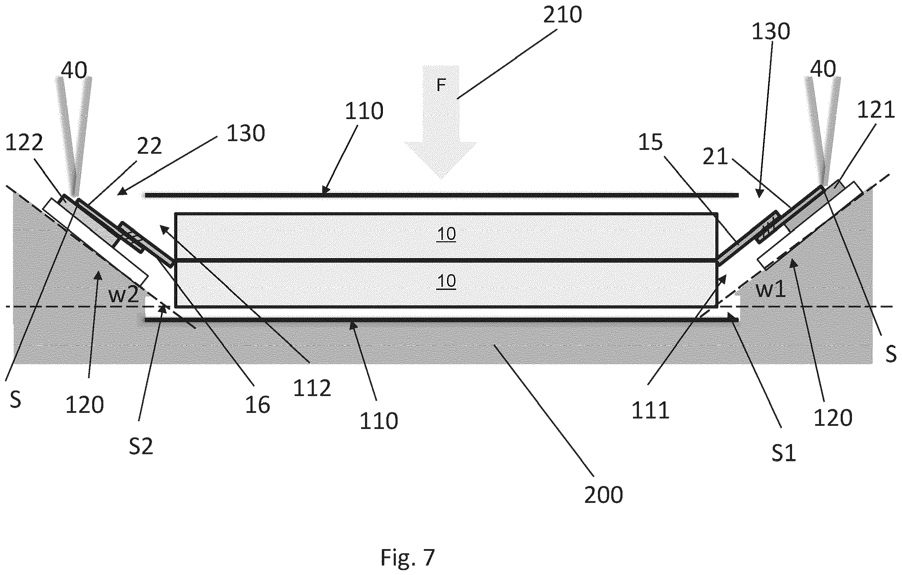

Die jeweiligen Anodenableiter 13 und Kathodenableiter 14 können hierbei in parallelen Gruppen 15`, 16' gebündelt werden, welche anschließend direkt oder indirekt miteinander verbindbar sind oder parallel nebeneinander mit Kollektoren 121, 122 (s. Fig. 7) verbindbar sein können.

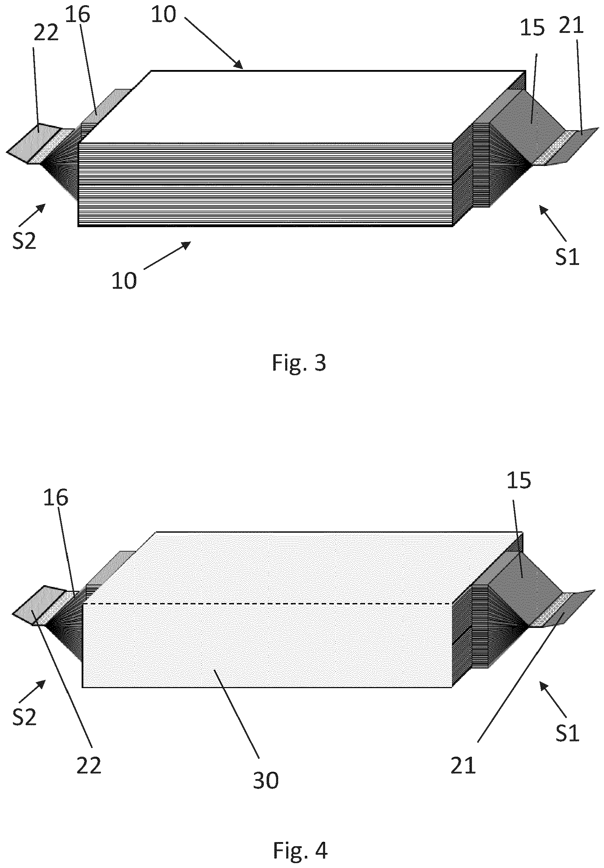

Die Fig. 3 zeigt eine perspektivische Darstellung der Elektrodenstapel 10 aus Fig. 2 einen weiteren Schritt des Verfahrens, bei dem die gebündelten Anodenableiter 15 und die gebündelten Kathodenableiter 16 durch Ableiterverlängerungen 21, 22 verlängert werden.

Die Ableiterverlängerungen 21, 22 werden im gezeigten Ausführungsbeispiel an beiden Seiten S1, S2 der Elektrodenpakete 10 elektrisch leitend mit den gebündelten Anodenableitern 15 und den gebündelten Kathodenableitern 16 verbunden. Dies kann beispielhaft durch Laserschweißen oder Ultraschallschweißen erfolgen. Dieser Schritt kann nach dem Bündeln der Anodenableiter 13 und der Kathodenableiter 14 oder zeitgleich mit dem Bündeln der Anodenableiter 13 und der Kathodenableiter 14 erfolgen.

Durch diese Maßnahme können die gebündelten Anodenableiter 15 und/oder die gebündelten Kathodenableiter 16 indirekt über die Ableiterverlängerungen 21, 22 mit dem mindestens einen Kollektor 121, 122 elektrisch leitend verbunden werden.

Im gezeigten Ausführungsbeispiel besteht die mindestens eine kathodenseitige Ableiterverlängerung 22 bzw. die Ableiterverlängerung 22 auf der zweiten Seite S2, auf welcher die gebündelten Kathodenableiter 16 aufliegen, aus Aluminium oder einer Aluminiumlegierung.

Die mindestens eine anodenseitige Ableiterverlängerung 21 bzw. die Ableiterverlängerung 21 auf der ersten Seite S1, auf welcher die gebündelten Anodenableiter 15 aufliegen, besteht aus Kupfer oder einer Kupferlegierung.

In der Fig. 4 ist eine weitere perspektivische Darstellung der Elektrodenstapel 10 aus Fig. 3 gezeigt. In der Fig. 4 wird ein weiterer Schritt des Verfahrens zum Herstellen von Batteriezellen 100 illustriert. Dabei wurden die beiden Elektrodenstapel 10, insbesondere die aktiven Schichten bzw. Materialien der Elektrodenstapel 10, mit einer außenseitigen Isolierung 30 versehen.

Die außenseitige Isolierung 30 ist beispielhaft als eine Folie zur elektrischen Isolierung ausgeführt und kann einlagig oder mehrlagig um die Elektrodenstapel 10 gewickelt werden. Die jeweiligen gebündelten Anodenableiter 15 und gebündelten Kathodenableiter 16 werden beispielhaft nicht mit der außenseitigen Isolierung 30 versehen.

Die Fig. 5 zeigt einen weiteren Schritt des Verfahrens mit Hilfe einer perspektivischen Darstellung. Bei diesem Schritt werden die durch die Isolierung 30 elektrisch isolierten Elektrodenstapel 10 in das Zellgehäuse 110 eingebracht. Die Elektrodenpakete 10 werden mit den gebündelten Anodenableitern 15 und den gebündelten Kathodenableitern 16 in das Zellgehäuse 110 hineingeschoben.

Das Zellgehäuse 110 ist an der ersten Seite S1 und der zweiten Seite S2 geöffnet, sodass die gebündelten Anodenableiter 15 und gebündelten Kathodenableiter 16 im Bereich der jeweiligen Öffnungen positioniert werden können. Die nicht bezifferten Öffnungen des Zellgehäuses 110 sind an zwei einander gegenüberliegenden Seiten S1, S2 angeordnet. Die gebündelten Anodenableiter 15 und gebündelten Kathodenableiter 16 können direkt oder über die Ableiterverlängerungen 21, 22 auch aus dem Zellgehäuse 110 hinausragen.

Die Elektrodenpakete 10 sind hierbei außenseitig isoliert und in einem Innenraum oder Innenvolumen des Zellgehäuses 110 angeordnet. Die außenseitige Isolierung 30 ermöglicht eine Beabstandung der Elektrodenpakete 10 gegenüber dem Zellgehäuse 110, welches beispielsweise aus einer Aluminiumlegierung hergestellt sein kann.

Die Fig. 6 zeigt eine perspektivische Darstellung des Zellgehäuses 110 mit eingebrachten Elektrodenpaketen 10 aus Fig. 5 mit elektrisch verbundenen Zelldeckelanordnungen 120. Der Schritt des elektrischen Verbindens der Ableiterverlängerungen 21, 22 mit den Kollektoren 121, 122 wird im Detail in Fig. 7 veranschaulicht. Die Fig. 7 zeigt eine schematische Schnittdarstellung des Zellgehäuses 110 aus Fig. 6, welche in einer Haltevorrichtung 200 angeordnet ist, um mit den beiden Zelldeckelanordnungen 120 elektrisch leitend verbunden zu werden.

Die beiden Zelldeckelanordnungen 120 werden mit jeweils mindestens einem außenseitig angeordneten Batteriepol 101, 102 und mit mindestens einem, mit dem Batteriepol 101, 102 verbundenen, innenseitig angeordneten Kollektor 121, 122 im Bereich der Öffnung des Zellgehäuses 110 derart positioniert, dass die gebündelten Anodenableiter 15 und/oder die gebündelten Kathodenableiter 16 indirekt über die Ableiterverlängerungen 21, 22 auf den Kollektoren 121, 122 aufliegen.

Dabei wird ein Spalt 130 zwischen dem Zellgehäuse 110 und den Zelldeckelanordnungen 120 eingestellt, um einen Werkzeugzugang zu den auf den Kollektoren 121, 122 aufliegenden, gebündelten, Anodenableitern 15, Kathodenableitern 16 bzw. den entsprechenden Ableiterverlängerungen 21, 22 zu ermöglichen.

Im gezeigten Ausführungsbeispiel werden die Ableiterverlängerungen 21, 22 der gebündelten Anodenableiter 15 und gebündelten Kathodenableiter 16 nach dem Positionieren der Zelldeckelanordnungen 120 elektrisch leitend durch Laserschweißverfahren mit den entsprechenden Kollektoren 121, 122 verbunden. Dieser Schritt kann simultan oder nacheinander auf beiden Seiten S1, S2 des Zellgehäuses 110 erfolgen.

Die Zelldeckelanordnungen 120 werden jeweils in einem Winkel w1, w1 im Bereich der Öffnung des Zellgehäuses 110 positioniert, um eine direkte oder indirekte Verbindung zwischen den gebündelten Anodenableitern 15 und/oder gebündelten Kathodenableitern 16 herzustellen. Der Winkel w1, w2 ist beispielhaft auf beiden Seiten S1, S2 gleich eingestellt und entspricht ca. 45°. Die jeweiligen Winkel w1, w2 können je nach Ausgestaltung des Verfahrens auch unterschiedlich groß eingestellt werden.

Um die Winkel w1, w2 wiederholbar konstant einstellen zu können wir eine Haltevorrichtung 200 verwendet, in welche das Zellgehäuse 110 mit den eingesetzten Elektrodenpaketen 10 und die Zelldeckelanordnungen 120 eingesetzt oder eingelegt werden. Die Haltevorrichtung 200 ist beispielhaft als eine Positioniermulde ausgeführt, in welche zuerst die Zelldeckelanordnungen 120 und anschließend das Zellgehäuse 110 mit den Elektrodenpaketen 10 eingelegt werden können. Hierdurch liegen die Ableiterverlängerungen 21, 22 auf den entsprechenden Kollektoren 121, 122 der Zelldeckelanordnungen 120 auf und können technisch einfach verbunden werden.

Zum Minimieren der Länge der Ableiterverlängerungen 21, 22 und/oder der gebündelten Anodenableiter 15 und/oder der gebündelten Kathodenableiter 16 können die entsprechenden Spalte 130 möglichst klein eingestellt werden. Dies kann durch ein Vergrößern der Winkel w1, w2 realisiert werden. Je nach Flexibilität der Ableiterverlängerungen 21, 22 und/oder der gebündelten Anodenableiter 15 und/oder der gebündelten Kathodenableiter 16 kann optional ein Niederhalter 210 eingesetzt werden, welcher mit einer vordefinierten oder variablen Anpresskraft F das Zellgehäuse 110 in die Haltevorrichtung 200 pressen kann.

In der Fig. 7 ist der Werkzeugzugang für ein Laserschweißwerkzeug 40 schematisch illustriert. Dabei wird durch das Laserschweißwerkzeug 40 eine randseitige Schweißnaht S zwischen den Ableiterverlängerungen 21, 22 und den entsprechenden Kollektoren 121, 22 eingebracht. Die randseitige Schweißnaht S ist beispielhaft als eine Kehlnaht-Schweißung ausgeführt, sodass eine zuverlässige Verbindung auch bei größeren Winkeln w1, w2 umsetzbar ist.

In einem weiteren Schritt werden die Öffnungen des Zellgehäuses 110 durch die Zelldeckelanordnungen 120 verschlossen. Die Zelldeckelanordnungen 120 sind dazu eingerichtet, die Öffnungen des Zellgehäuses 110 fluiddicht zu verschließen.

Beispielsweise können die Zelldeckelanordnungen 120 nach einer elektrischen Anbindung der Elektrodenpakete 10 in die Öffnung eingesetzt und anschließend mit dem Zellgehäuse 110 verbunden werden. Dies kann beispielsweise durch Verkleben, Verschweißen, Verlöten, Bördeln, und dergleichen erfolgen.

Die Fig. 8 zeigt eine perspektivische Darstellung der Batteriezelle 100 gemäß einer Ausführungsform der Erfindung, welche durch das Verschließen der Öffnungen des Zellgehäuses 110 mittels der Zelldeckelanordnungen 120 fertiggestellt werden kann.

Die Batteriezelle 100 weist ein Zellgehäuse 110 mit zwei Öffnungen und mit zwei Zelldeckelanordnungen 120 auf, wobei die Öffnungen durch die Zelldeckelanordnungen 120, insbesondere fluiddicht, verschlossen sind.

In dem Zellgehäuse 110 der Batteriezelle 100 sind beispielhaft zwei Elektrodenpakete 10 angeordnet, welche elektrisch mit den Batteriepolen 101, 102 der Zelldeckelanordnungen 120 verbunden sind.

## Patentansprüche

1. Verfahren zum Herstellen von einer Batteriezelle (100), aufweisend mindestens zwei Batteriepole (101, 102), wobei mindestens ein Elektrodenpaket (10) mit einer Vielzahl von Anodenfolien (11) und Kathodenfolien (12), welche durch Separatorfolien voneinander getrennt sind, bereitgestellt wird, wobei die Anodenfolien (11) endseitig Anodenableiter (13) und die Kathodenfolien (12) endseitig Kathodenableiter (14) aufweisen, wobei die Anodenableiter (13) und die Kathodenableiter (14) jeweils gebündelt werden, wobei
- das mindestens eine Elektrodenpaket (10) mit den gebündelten Anodenableitern (15) und gebündelten Kathodenableitern (16) in einem Zellgehäuse (110) positioniert wird,
- mindestens eine Zelldeckelanordnung (120) mit mindestens einem außenseitig angeordneten Batteriepol (101, 102) und mit mindestens einem, mit dem Batteriepol (101, 102) verbundenen, innenseitig angeordneten Kollektor (121, 122) im Bereich von mindestens einer Öffnung (111, 112) des Zellgehäuses (110) derart positioniert wird, dass die gebündelten Anodenableiter (15) und/oder gebündelten Kathodenableiter (16) direkt oder indirekt auf dem mindestens einen Kollektor (121, 122) aufliegen, wobei ein Spalt (130) zwischen dem Zellgehäuse (110) und der mindestens einen Zelldeckelanordnung (120) im Bereich der Öffnung (111, 112) des Zellgehäuses (110) eingestellt wird,
- die gebündelten Anodenableiter (15) und gebündelten Kathodenableiter (16) direkt oder indirekt elektrisch leitend mit dem mindestens einen Kollektor (121, 122) verbunden werden,
- die mindestens eine Öffnung (111, 112) des Zellgehäuses (110) durch die mindestens eine Zelldeckelanordnung (120) verschlossen wird.

2. Verfahren nach Anspruch 1, wobei das mindestens eine Elektrodenpaket (10) mit den gebündelten Anodenableitern (15) und gebündelten Kathodenableitern (16) vor dem Positionieren in dem Zellgehäuse (110) mit einer außenseitigen Isolation (30) versehen wird.

3. Verfahren nach Anspruch 1 oder 2, wobei die gebündelten Anodenableiter (15) und/oder gebündelten Kathodenableiter (16) indirekt über mindestens eine Ableiterverlängerung (21, 22) auf dem mindestens einen Kollektor (121, 122) aufliegen, wobei die gebündelten Anodenableiter (15) und gebündelten Kathodenableiter (16) indirekt über die Ableiterverlängerung (21, 22) elektrisch leitend mit dem mindestens einen Kollektor (121, 122) verbunden werden.

4. Verfahren nach Anspruch 3, wobei die mindestens eine Ableiterverlängerung (22) der gebündelten Kathodenableiter (16) aus Aluminium oder einer Aluminiumlegierung und die mindestens eine Ableiterverlängerung (21) der gebündelten Anodenableiter (15) aus Kupfer oder einer Kupferlegierung verwendet wird.

5. Verfahren nach einem der Ansprüche 1 bis 4, wobei die mindestens eine Zelldeckelanordnung (120) in einem Winkel (w1, w2), insbesondere in einem Winkel zwischen 5° und 85°, im Bereich der Öffnung (111, 112) des Zellgehäuses (110) positioniert wird, um eine direkt oder indirekte Verbindung zwischen den gebündelten Anodenableitern (15) und/oder gebündelten Kathodenableitern (16) herzustellen.

6. Verfahren nach einem der Ansprüche 1 bis 5, wobei die mindestens eine Zelldeckelanordnung (120) durch mindestens eine Haltevorrichtung (200) relativ zu der mindestens einen Öffnung (111, 112) des Zellgehäuses (110) positioniert wird, wobei die gebündelten Anodenableiter (15) und/oder die gebündelten Kathodenableiter (16) und/oder Ableiterverlängerung (21, 22) aufgrund von elastischen Eigenschaften und/oder durch mindestens einen Niederhalter (210) auf dem mindestens einen Kollektor (121, 122) der mindestens einen Zelldeckelanordnung (120) gepresst werden.

7. Verfahren nach einem der Ansprüche 1 bis 6, wobei die gebündelten Anodenableiter (15) und/oder die gebündelten Kathodenableiter (16) direkt oder indirekt durch ein Einbringen von mindestens einer randseitigen Schweißnaht (S) elektrisch leitend mit dem mindestens einen Kollektor (121, 122) verbunden werden.

8. Verfahren nach Anspruch 7, wobei die gebündelten Anodenableiter (15) und/oder die gebündelten Kathodenableiter (16) und/oder entsprechende Ableiterverlängerungen (21, 22) durch ein Einbringen von mindestens einer Kehlnaht-Schweißung elektrisch leitend mit dem mindestens einen Kollektor (121, 122) verbunden werden.

9. Verfahren nach einem der Ansprüche 1 bis 8, wobei die Batteriezelle (100) mindestens zwei an zwei gegenüberliegenden Seiten (S1, S2) des Zellgehäuses (110) angeordnete Batteriepole (101, 102) aufweist, wobei die Anodenableiter (13) der Anodenfolien (11) an einer ersten Seite (S1) und die Kathodenableiter (14) der Kathodenfolien (12) an einer zweiten Seite (S2) des mindestens einen Elektrodenpakets (10) gebündelt werden.

10. Verfahren nach Anspruch 9 wobei zwei Zelldeckelanordnungen (120) bereitgestellt werden, wobei eine erste Zelldeckelanordnung (120) im Bereich einer ersten Öffnung (111) und eine zweite Zelldeckelanordnung (120) im Bereich einer zweiten Öffnung (112) des Zellgehäuses (1109 angeordnet wird, wobei die Zelldeckelanordnungen (120) mit einem gleichen oder einem voneinander abweichenden Winkel (w1, w2) gegenüber dem Zellgehäuse (110) positioniert werden, um die gebündelten Anodenableiter (15) und gebündelten Kathodenableiter (16) elektrisch leitend zu kontaktieren.

11. Verfahren nach Anspruch 10, wobei die beiden Zelldeckelanordnungen (120) zueinander spiegelsymmetrisch angeordnet werden.

12. Verfahren nach einem der Ansprüche 1 bis 11, wobei die gebündelten Anodenableiter (15) und gebündelten Kathodenableiter (16) zeitgleich direkt oder indirekt elektrisch leitend mit jeweils mindestens einem Kollektor (121, 122) verbunden werden.

13. Verfahren nach einem der Ansprüche 1 bis 12, wobei die Anodenableiter (15) und die Kathodenableiter (16) jedes Elektrodenpakets (10) von mehreren Elektrodenpaketen (10) separat gebündelt werden, oder wobei die Anodenableiter (15) und die Kathodenableiter (16) mehrerer Elektrodenpakete (10) zusammen gebündelt werden.

14. Batteriezelle (100), hergestellt durch ein Verfahren gemäß einem der vorhergehenden Ansprüche, aufweisend ein Zellgehäuse (110) mit mindestens einer Öffnung (111, 112) und aufweisend mindestens eine Zelldeckelanordnung (120), welche die mindestens eine Öffnung (111, 112) verschließt, wobei in dem Zellgehäuse (110) mindestens ein Elektrodenpaket (10) angeordnet ist, welches elektrisch mit Batteriepolen (101, 102) der mindestens einen Zelldeckelanordnung (120) verbunden ist.
